# EUROPEAN PATENT APPLICATION

(11) **EP 4 597 704 A1**
(43) Date of publication of application: **06.08.2025**
(21) Application number: 23871500.7
(22) Date of filing: 09.08.2023
(51) Int. Cl.: H01M 50/213, H01M 50/291, H01M 50/293, H01M 50/503

(54) **BATTERY PACK AND METHOD FOR MANUFACTURING SAME**

(30) Priority: 29.09.2022 JP 2022156565
(71) Applicant: Panasonic Energy Co., Ltd., Osaka 570-8511 (JP)
(72) Inventor: NAKAGAWA, Yutaro, Kadoma-shi, Osaka 571-0057 (JP); ADACHI, Kazuki, Kadoma-shi, Osaka 571-0057 (JP)
(74) Representative: Novagraaf International SA
(86) International application number: PCT/JP2023/029026
(87) International publication number: WO 2024/070258

(57) **Abstract**

A secondary battery cell can be fixed to a battery holder with high reliability. Battery pack 100 includes a plurality of secondary battery cells 1 and battery holder 20 including a plurality of storage tubes 22 that respectively hold the plurality of secondary battery cells 1. Battery holder 20 is divided into at least first divided holder 21A and second divided holder 21B in the length direction of secondary battery cell 1, and first storage tube 22A of first divided holder 21A and second storage tube 22B of second divided holder 21B are joined to form a cell storage space for storing secondary battery cell 1. At least a part of second storage tube 22B has recess 24 formed on at least a part of the inner surface thereof, and adhesive 50 is interposed between recess 24 of storage tube 22 and secondary battery cell 1.

## Description

### TECHNICAL FIELD

The present disclosure relates to a battery pack and a method for manufacturing the same.

### BACKGROUND ART

In order to drive electric devices using a chargeable secondary battery such as a lithium ion secondary battery, a battery pack is used in which secondary battery cells are held in a battery holder, connected by a lead plate, and stored in an exterior case (for example, Patent Literature 1). In such a battery pack, when the secondary battery cell moves in the battery holder, the connection with the lead plate may be disconnected. In particular, in the case of a secondary battery cell using a cylindrical exterior can, since the cylindrical secondary battery cell is inserted into a cylindrical storage tube, it is difficult to regulate the movement of the secondary battery cell in a rotation direction. Furthermore, depending on the application of the electric device using the battery pack, the electric device may be exposed to vibration or impact, and it is required to prevent the connection with the lead plate from being disconnected due to movement of the secondary battery cell.

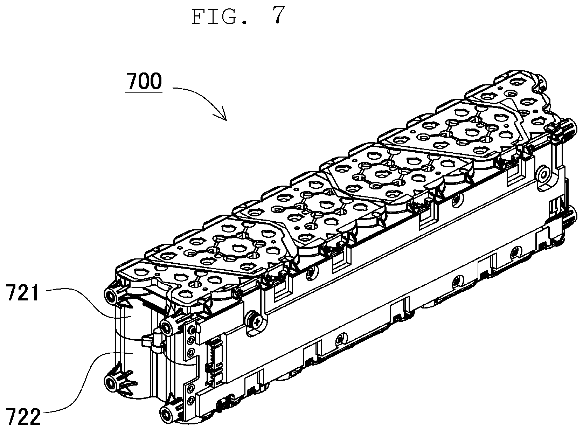

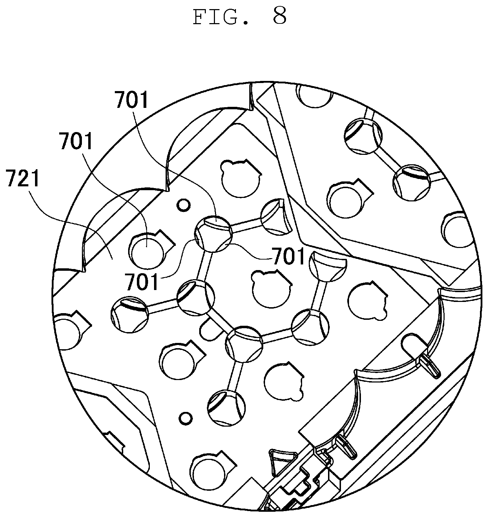

In order to fix the secondary battery cell to the battery holder, it is conceivable to fix the secondary battery cell to the battery holder with an adhesive. For example, as in battery pack 700 illustrated in the perspective view of Fig. 7, it is conceivable to apply an adhesive in a state where upper holder 721 and lower holder 722 are covered with the upper and lower end surfaces of the cylindrical secondary battery cell, respectively, and secondary battery cell 701 is exposed from the opening provided in upper holder 721 as illustrated in the enlarged view of Fig. 8.

However, in this method, it is difficult to adjust the application amount of the adhesive. That is, depending on secondary battery cells 701, the amount of the adhesive may be too large or too small, and each secondary battery cell may not be stably fixed to upper holder 721. Furthermore, since the adhesive is applied to the surface of upper holder 721 at the time of assembling the battery pack, there is also a problem in that the adhesive adheres to an unintended portion and the portion easily gets dirty.

### Citation List

### Patent Literature

PTL 1: Unexamined Japanese Patent Publication No. 2013-008655

### SUMMARY OF THE INVENTION

### Technical problem

It is an object of the present disclosure to provide a battery pack capable of reliably fixing a secondary battery cell to a battery holder, and a method for manufacturing the battery pack.

### Solution to problem

A battery pack according to an aspect of the present invention is a battery pack including: a plurality of secondary battery cells; and a battery holder including a plurality of storage tubes that respectively hold the plurality of secondary battery cells, in which the battery holder is divided into at least a first divided holder and a second divided holder in a length direction of each of the plurality of secondary battery cells, the first divided holder includes first storage tubes and the second divided holder includes second storage tubes and each of the first storage tubes is joined with a corresponding one of the second storage tubes to form a cell storage space for storing a corresponding one of the plurality of secondary battery cells, and at least a part of the second storage tubes form a recess on at least a part of an inner surface of a corresponding one of the second storage tubes, and an adhesive is interposed between the recess of each of the second storage tubes and a corresponding one of the plurality of secondary battery cells.

A method for manufacturing a battery pack according to another aspect of the present invention is a method for manufacturing a battery pack including: a plurality of secondary battery cells including a plurality of cylindrical exterior cans, respectively; and a battery holder including a plurality of storage tubes each of which can hold a respective one of the plurality of secondary battery cells, the method including: a step of inserting each of the plurality of secondary battery cells into a respective one of a plurality of first storage tubes of a first battery holder, each of the plurality of first storage tubes having a length shorter than a length of a corresponding one of the plurality of cylindrical exterior cans; a step of applying an uncured adhesive to a gap surrounded by circumferential surfaces of a plurality of adjacent cylindrical exterior cans among the plurality of cylindrical exterior cans in a state where each of the plurality of cylindrical exterior cans is partially exposed from the respective one of the plurality of first storage tubes; a step of inserting each of the plurality of cylindrical exterior cans partially exposed from the respective one of the plurality of first storage tubes into a respective one of a plurality of second storage tubes of a second battery holder, each of the plurality of second storage tubes having a length shorter than a length of a corresponding one of the plurality of cylindrical exterior cans, and guiding the uncured adhesive to a recess formed in at least a part of an inner surface of each of the plurality of second storage tubes; and a step of curing the uncured adhesive to fix the plurality of secondary battery cells to the battery holder.

### Advantageous effect of invention

According to the battery pack and the method for manufacturing the battery pack according to an aspect of the present invention, it is possible to push out and supply the adhesive to the recess formed on the inner surface of the second storage tube, and an advantage that the amount of the adhesive can be uniformly controlled for each secondary battery cell and the secondary battery cells can be fixed to the battery holder with high reliability is obtained.

### BRIEF DESCRIPTION OF THE DRAWINGS

Fig. 1 is a perspective view of a battery pack according to a first exemplary embodiment.
Fig. 2 is an exploded perspective view of the battery pack in Fig. 1.
Fig. 3 is an exploded perspective view of a battery module in Fig. 2.
Fig. 4 is an exploded perspective view of a battery holder in Fig. 3 viewed from a back side.
Fig. 5 is an enlarged rear view of a first divided holder in Fig. 4.
Fig. 6 is a perspective view illustrating a state in which a lead plate is removed from the battery module in Fig. 2 and the battery holder is rotated by 90°.
Fig. 7 is an exploded perspective view illustrating a battery pack according to a comparative example.
Fig. 8 is an enlarged perspective view of a main part of the battery pack in Fig. 7.
Fig. 9 is a perspective view illustrating a state in which secondary battery cells are inserted into a second divided holder at the time of assembling the battery module in Fig. 6.
Fig. 10 is a plan view illustrating a position where an adhesive is applied to the battery module in Fig. 9.
Fig. 11 is a perspective view illustrating a state in which the battery module in Fig. 10 is covered with the first divided holder.
Fig. 12 is an enlarged plan view of a main part of the first divided holder in Fig. 3.

### DESCRIPTION OF EMBODIMENT

Aspects of the present invention may be specified by the following configurations and features.

In a battery pack according to another aspect of the present invention, in the above aspect, the battery holder includes cylindrical continuous bodies stacked in multiple stages, each of the cylindrical continuous bodies being formed by linearly connecting one or more storage tubes among the plurality of storage tubes, the cylindrical continuous bodies include an intermediate cylindrical continuous body positioned a middle of the cylindrical continuous bodies in a stacking direction of the multiple stages, and an adjacent cylindrical continuous body being adjacent to the intermediate cylindrical continuous body in the stacking direction, and the recess is formed on the inner surface of each of the one or more storage tubes of the intermediate cylindrical continuous body and the inner surface of each of the one or more storage tubes of the adjacent cylindrical continuous body, the inner surface of each of the one or more storage tubes facing the intermediate cylindrical continuous body. With the above configuration, instead of applying the adhesive to the entire surface of all the secondary battery cells, the adhesive is applied to the periphery of the secondary battery cell positioned in the middle and the surface adjacent to the secondary battery cell positioned in the middle among the periphery of the secondary battery cell positioned therearound, and the secondary battery cell can be efficiently fixed to the battery holder.

In a battery pack according to another aspect of the present invention, in any one of the above-described aspects, the plurality of storage tubes are stacked, the plurality of storage tubes includes one or more second storage tubes positioned along a periphery of the battery holder, each of the one or more second storage tubes including a surface exposed without any second storage tube adjacent to the each of the one or more second storage tubes, and the recess is not provided inside the surface of each of the one or more second storage tubes. With the above configuration, since the recess is not provided on the outer peripheral surface side of the battery holder, it is possible to prevent the adhesive from being applied to the periphery of the stack of the secondary battery cells, to avoid the uncured adhesive from exposing at the time of assembly, and to avoid a situation in which the adhesive adheres to an unintended portion and the portion gets dirty.

In a battery pack according to still another aspect of the present invention, in any one of the above-described aspects, the battery holder forms, on at least one end surface of the battery holder, an opening window through which a gap between the inner surface of the at least one of the second storage tubes and a surface of the corresponding one of the plurality of secondary battery cells is exposed. With the above configuration, whether or not the gap between the second storage tube and the secondary battery cell exposed in the opening window is filled with the adhesive can be visually confirmed from the outside of the battery holder, and the application state of the adhesive can be, for example, visually recognized, so that the adhesion state of the secondary battery cell can be grasped and the reliability can be improved.

In a battery pack according to still another aspect of the present invention, in any one of the above aspects, each of the first storage tubes has an inner surface that is a smooth surface.

In a battery pack according to still another aspect of the present invention, in any one of the above aspects, the recess is formed in a gently curved surface shape.

In the battery pack according to still another aspect of the present invention, in any one of the above aspects, each of the plurality of secondary battery cells has a cylindrical outer shape.

In a battery pack according to still another aspect of the present invention, in any one of the above aspects, the battery pack includes a lead plate that connects the plurality of secondary battery cells. With the above configuration, by reliably fixing the cylindrical secondary battery cell in the battery holder, it is possible to reduce the possibility that the secondary battery cell rotates and the welded portion with the lead plate is broken to cause poor connection.

In a method for manufacturing a battery pack according to still another aspect of the present invention, in any one of the above aspects, the step of applying the uncured adhesive does not apply the adhesive to at least one of the plurality of cylindrical exterior cans positioned on an outer periphery among the plurality of cylindrical exterior cans partially exposed from the plurality of first storage tubes. With this method, it is possible to obtain an advantage that the adhesive can be efficiently applied by applying the adhesive only to the region surrounded by the adjacent secondary battery cells instead of applying the adhesive to the entire periphery of all the secondary battery cells.

In a method for manufacturing a battery pack according to still another aspect of the present invention, in any one of the above aspects, the method further includes a step of confirming whether or not the recess is filled with the uncured adhesive through an opening window provided on a surface of the battery holder to which the uncured adhesive is applied and through which a gap between the inner surface of each of the plurality of second storage tubes and a surface of a corresponding one of the plurality of secondary battery cells is exposed. With this method, whether or not the gap between the second storage tube and the secondary battery cell exposed to the opening window is filled with the adhesive can be visually confirmed from the outside of the battery holder, and the application state of the adhesive can be, for example, visually recognized, so that the adhesion state of the secondary battery cell can be grasped and the reliability can be improved.

Exemplary embodiments of the present invention are described below with reference to the drawings. However, the exemplary embodiments described below are examples for embodying the technical idea of the present invention, and the present invention is not limited to the exemplary embodiments described below. Furthermore, in the present specification, members indicated in the claims are never specified to the members of the exemplary embodiments. In particular, the dimensions, materials, shapes, relative arrangements, and the like of the components described in the exemplary embodiment are not intended to limit the scope of the present invention exclusively unless otherwise specified, and are merely illustrative examples. Note that members illustrated in each drawing have sizes, positional relationships, or the like that may be exaggerated for clarity of description. Moreover, in the following description, the same names and reference marks indicate the same or similar members, and detailed description will be appropriately omitted. Moreover, each element constituting the present invention may be configured such that a plurality of elements is formed of one member to allows the one member to serve as the plurality of elements, conversely, a function of one member is shared and implemented by a plurality of members.

The battery pack of the present invention can be used as a power source for driving an assist bicycle, a power source for driving a mobility device such as an electric cart for home delivery or a golf course, or an electric scooter. Furthermore, the battery pack can also be used as a power source for driving a vehicle such as a construction machine, a hybrid vehicle, or an electric vehicle. Moreover, the battery pack can also be used as a power source for a portable electric device such as an electric cleaner, a cleaning robot, an electric power tool, and a wireless device. Alternatively, the battery pack can also be used as a backup power source for a server or a power source device for home use, business use, or factory use in stationary-type power storage applications. Hereinafter, as an exemplary embodiment of the present invention, a battery pack used as a driving power source for an assist bicycle will be described as an example.

### [First exemplary embodiment]

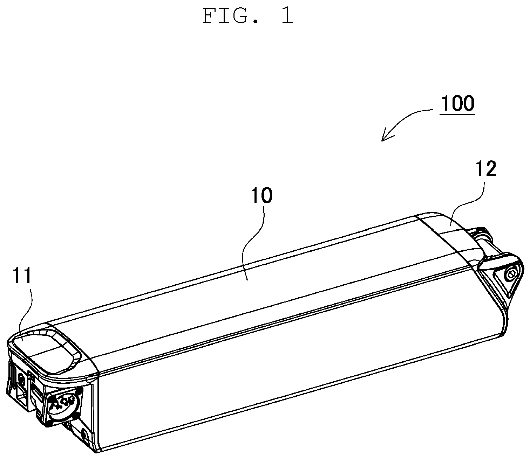

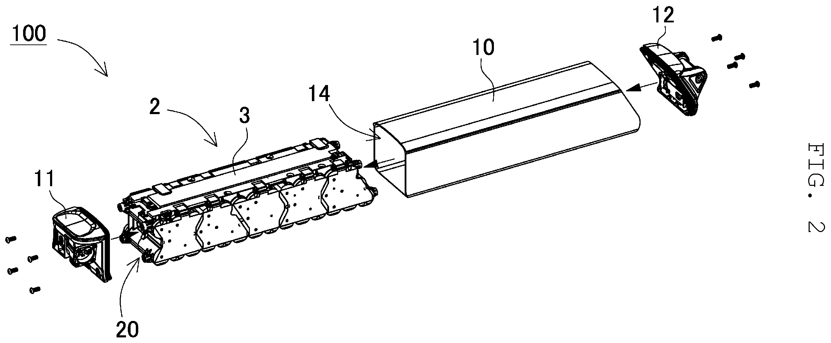

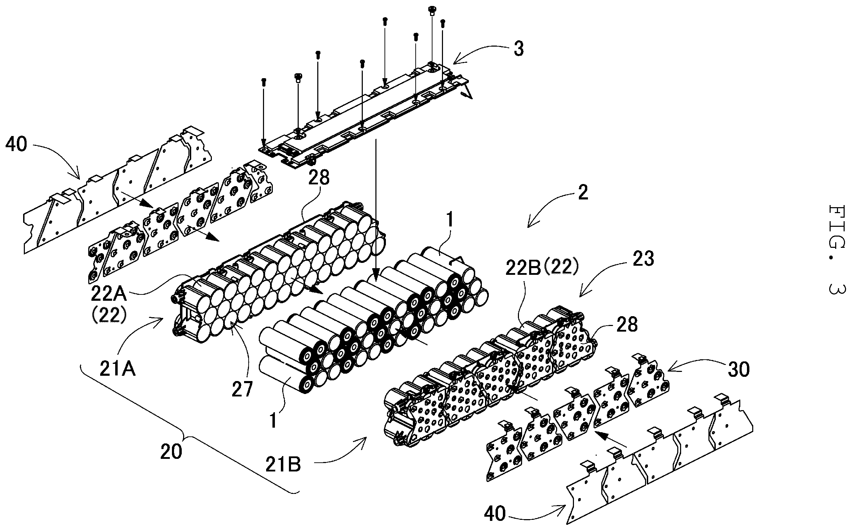

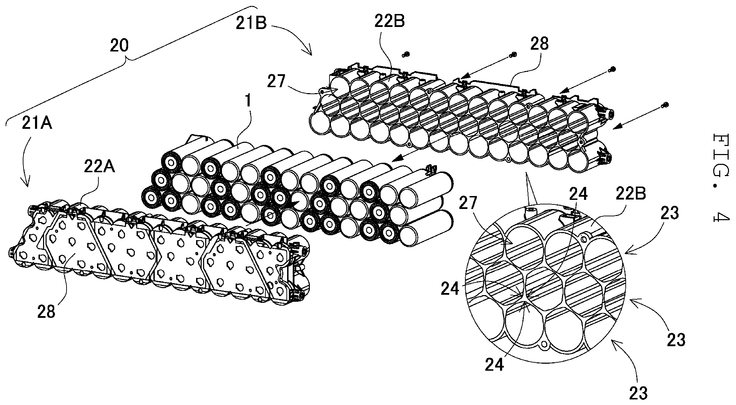

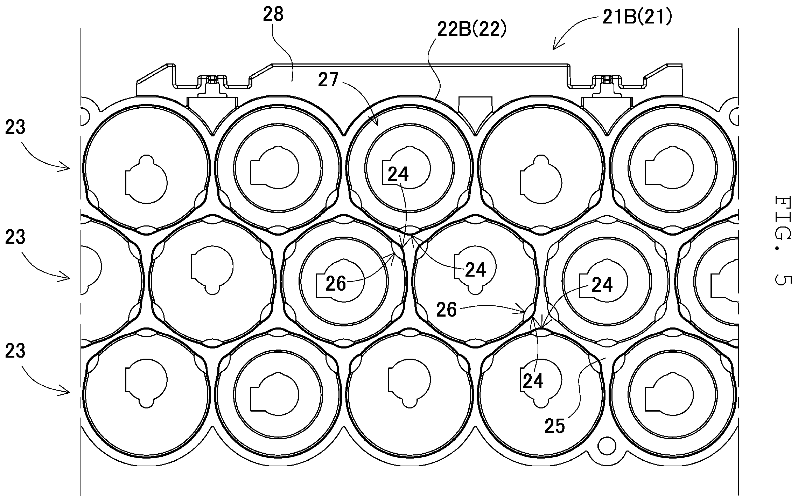

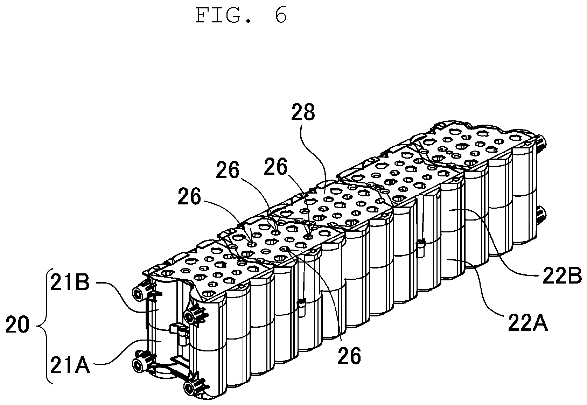

Battery pack 100 according to a first exemplary embodiment of the present invention is illustrated in Figs. 1 to 6. In these drawings, Fig. 1 is a perspective view of battery pack 100 according to the first exemplary embodiment, Fig. 2 is an exploded perspective view of battery pack 100 in Fig. 1, Fig. 3 is an exploded perspective view of battery module 2 in Fig. 2, Fig. 4 is an exploded perspective view of battery holder 20 in Fig. 3 as viewed from the rear side, Fig. 5 is an enlarged rear view of first divided holder 21A in Fig. 4, and Fig. 6 is a perspective view illustrating a state in which a lead plate is removed from battery module 2 in Fig. 2 and battery holder 20 is rotated by 90°. Battery pack 100 illustrated in these drawings includes exterior case 10, battery module 2, and circuit board 3. Battery module 2 includes one or more secondary battery cells 1 and battery holder 20 that holds secondary battery cells 1. Furthermore, each secondary battery cell 1 is connected to circuit board 3 via lead plate 30.

### (Exterior case 10)

Exterior case 10 stores one or more secondary battery cells 1 and battery holder 20. As illustrated in Fig. 1, Fig. 2, and the like, exterior case 10 has a box-shape appearance. Exterior case 10 is formed in a tubular shape having end portions each of which opens in the longitudinal direction. Each of the opening ends are closed by a respective one of lids 11 and 12. Note that the exterior case is not limited to this configuration, and may be divided into an upper case and a lower case, for example. Exterior case 10 may be made of metal having excellent rigidity and heat dissipation, or may be made of a lightweight resin having excellent insulation, for example, polycarbonate, a PC-ABS alloy, or the like. Furthermore, as illustrated in Fig. 2, module storage space 14 for storing battery module 2 is provided inside exterior case 10.

### (Secondary battery cell 1)

As one or more secondary battery cells 1, a secondary battery cell in which the exterior can is cylindrical or square can be used. In the examples of Figs. 3 and 4, cylindrical secondary battery cells are used. Each secondary battery cell 1 has positive and negative electrodes. The positive and negative electrodes are preferably provided on the respective end surfaces of secondary battery cell 1. For such a secondary battery cell 1, a known secondary battery such as a lithium ion secondary battery, a nickel hydrogen battery, or a nickel cadmium battery can be appropriately used.

### (Battery holder 20)

The plurality of secondary battery cells 1 is stored in battery holder 20. Such a battery holder 20 can be made of resin such as polycarbonate having excellent insulation. In battery holder 20, a plurality of storage tubes 22 for individually storing secondary battery cells 1 are provided in end surface plate 28. In the examples of Figs. 3 to 6, battery holder 20 is horizontally divided into first divided holder 21A and second divided holder 21B. In the examples illustrated in these drawings, cylindrical secondary battery cells 1 in the horizontal orientation are respectively stored in first storage tube 22A of first divided holder 21A and second storage tube 22B of second divided holder 21B from both sides. In this manner, first storage tube 22A of first divided holder 21A and second storage tube 22B of second divided holder 21B are joined to form cell storage space 27 for storing secondary battery cell 1.

Each of first storage tube 22A and second storage tube 22B is shorter than the length of the exterior can of secondary battery cell 1. Preferably, each length of first storage tube 22A and second storage tube 22B is about 1/2 of the outer can. First storage tube 22A and second storage tube 22B are joined to cover the exterior can of secondary battery cell 1. Note that first storage tube 22A and second storage tube 22B may have the same length or different lengths. However, first storage tube 22A and second storage tube 22B are designed so as to have the length of the exterior can together.

### (Lead plate 30)

Lead plate 30 is disposed on a side surface of battery holder 20. Lead plate 30 connects the electrodes on the end surfaces of secondary battery cells 1 to connect the plurality of secondary battery cells 1 in series or in parallel. In the examples of Figs. 3 and 4, and the like, 40 secondary battery cells 1 are connected as 10 series connections and 4 parallel connections. Note that the number and arrangement of the secondary battery cells, the number of series and parallel connections, and the like are not limited to this example, and any number and arrangement can be appropriately adopted.

Lead plate 30 is made of a metal plate having excellent conductivity such as nickel or aluminum. Furthermore, insulating plate 40 is disposed on the end surface of lead plate 30. Insulating plate 40 is made of a material having excellent insulation such as paper or polycarbonate.

Furthermore, as illustrated in the exploded perspective view of Fig. 3, circuit board 3 is placed on the upper surface of battery holder 20. Battery holder 20 holds secondary battery cells 1 and circuit board 3. Battery module 2 is connected to circuit board 3 via lead plate 30. A mounting surface on which circuit board 3 is mounted is formed on the upper surface of battery holder 20 constituting battery module 2.

### (Circuit board 3)

On circuit board 3, a charge and discharge circuit for charging and discharging secondary battery cell 1, a protection circuit for monitoring voltage and temperature of secondary battery cell 1 and cutting off the current at the time of abnormality, and the like are implemented. Circuit board 3 is made of a glass epoxy board or the like.

### (Recess 24)

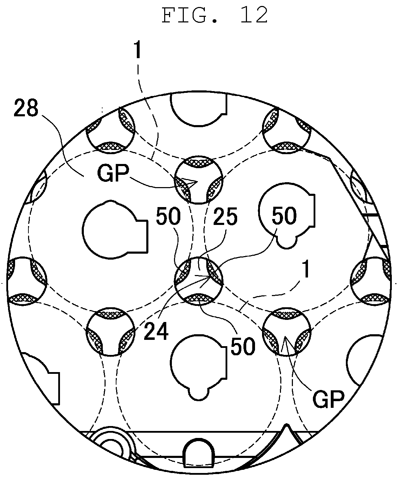

Among first divided holder 21A and second divided holder 21B constituting battery holder 20, first divided holder 21A has the inner surface of first storage tube 22A as a smooth surface as illustrated in Fig. 3. On the other hand, as illustrated in Figs. 4 and 5, recess 24 is provided on the inner surface of second storage tube 22B of second divided holder 21. By interposing adhesive 50 in recess 24 as illustrated in Fig 12 described later, secondary battery cell 1 can be fixed to storage tube 22. With such a configuration, it is possible to push out and supply adhesive 50 to recess 24 formed on the inner surface of storage tube 22. Furthermore, it is also possible to control the amount of adhesive 50 so as to be uniform in each secondary battery cell 1.

As described above, secondary battery cell 1 is fixed by welding an electrode on the end surface with the lead plate or the like. When secondary battery cell 1 rotates on the inner surface of storage tube 22, a twisting force is applied to the lead plate, and the connection portion may be damaged. In particular, in a battery pack for a moving body such as an assist bicycle, secondary battery cell 1 is likely to rotate due to vibration or the like. Therefore, in order to regulate relative movement between secondary battery cell 1 and battery holder 20, it is conceivable to fix secondary battery cell 1 and battery holder 20 with an adhesive.

As a method for applying the adhesive, it is conceivable to apply the adhesive in a state where secondary battery cell 701 is exposed from an opening provided in upper holder 721 as illustrated in the enlarged view of Fig. 8 in the configuration in which cylindrical secondary battery cell 701 is covered with upper holder 721 and lower holder 722 from above and below, respectively, as in battery pack 700 according to a comparative example illustrated in the perspective view of Fig. 7. That is, the adhesive is applied from the surface of upper holder 721 to adhere to secondary battery cells 701.

However, in this method, since the adhesive is applied to the surface of upper holder 721 at the time of assembling battery pack 700, there is a problem in that uncured adhesive adheres to an unintended portion during the operation and the portion easily gets dirty.

Furthermore, it is desirable that the adhesive is uniformly applied over the length direction of secondary battery cell, but it is not easy to uniformly apply the adhesive to the outer surface of the secondary battery cell and the inner surface of the storage tube as described above. That is, even when the adhesive is applied to the surface of cylindrical storage tube 22 or the outer surface of the secondary battery cell, and the secondary battery cell is inserted into a cylindrical tube, the adhesive is not necessarily uniformly diffused. According to the tests conducted by the inventors of the present application, it has been found that the adhesive partially adheres in a lump without being pushed and spread as intended. In addition, it is not possible to externally confirm whether the adhesive has been applied as intended, and there is no way to confirm only by decomposing, that is, breaking the battery pack, and the reliability is poor.

On the other hand, in battery pack 100 according to the first exemplary embodiment, as described above, recess 24 is partially provided on the inner surface of storage tube 22 of battery holder 20, and adhesive 50 is interposed in recess 24. As a result, adhesive 50 is not exposed on the surface of battery holder 20, uncured adhesive 50 is prevented from adhering to an unnecessary portion, and the application amount of adhesive 50 can be controlled to a desired position where recess 24 is provided.

### (Method for manufacturing battery pack)

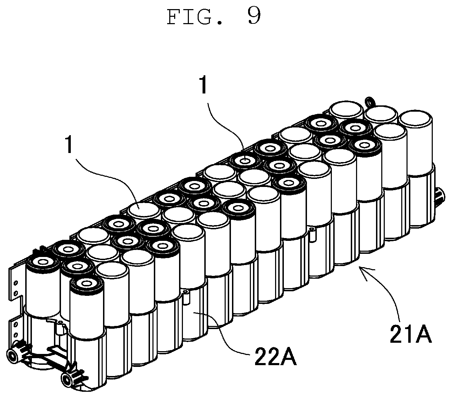

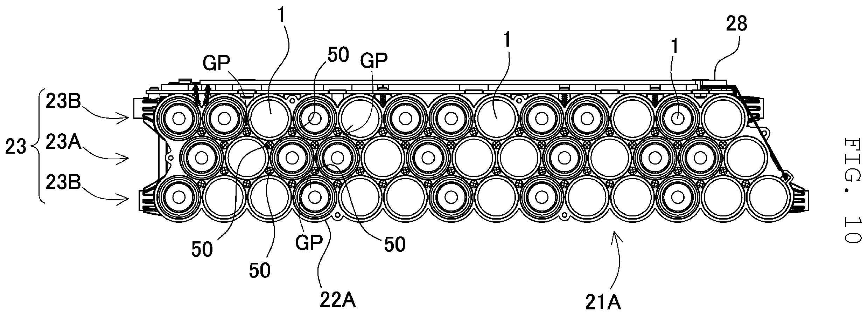

An example of a specific method for manufacturing the battery pack will be described. First, as illustrated in Fig. 9, each of the plurality of secondary battery cells 1 is inserted into a respective one of the plurality of first storage tubes 22A of first battery holder 20. Next, in a state where the exterior cans of the respective secondary battery cells 1 are partially exposed from the plurality of first storage tubes 22A, as indicated by crosshatched circles in Fig. 10, uncured adhesive 50 is applied to gap GP surrounded by the circumferential surfaces of the plurality of adjacent exterior cans. In this example, a total of 40 secondary battery cells 1, which are 13 in the first and second stages and 14 in the third stage, are stacked in a staggered shape in a direction orthogonal to the length direction of secondary battery cells 1. Then, adhesive 50 is supplied by scanning a dispenser or the like in a dotted manner to each region surrounded by three secondary battery cells in the secondary battery cells stacked in a staggered shape. Adhesive 50 supplied to the region surrounded by the three secondary battery cells drops along the length direction of the secondary battery cells due to its own weight, and stops at the end surface of first divided holder 21A. The viscosity of adhesive 50 is adjusted to be high so as to remain in the exterior can of the secondary battery cell to some extent in an uncured state. As such an adhesive 50, a material having flame retardancy and capable of joining metal and resin, such as silicone, can be used.

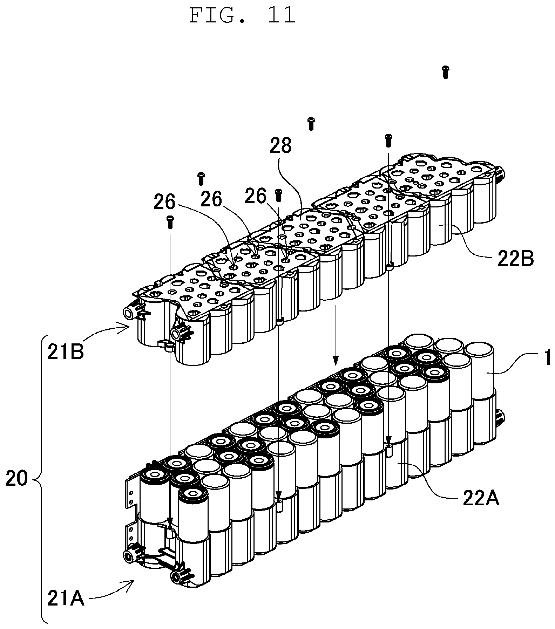

Then, in this state, as illustrated in Fig. 11, the exterior can of each secondary battery cells 1 exposed from a respective one of the plurality of first storage tubes 22A are inserted into a respective one of the plurality of second storage tubes 22B of second divided holder 21B. At this time, uncured adhesive 50 is guided to recess 24 formed in a part of the inner surface of each second storage tube 22B. Here, by supplying adhesive 50 to gap GP surrounded by the exterior cans of secondary battery cells 1 and then covering secondary battery cells 1 with second storage tube 22B instead of directly applying adhesive 50 to recess 24, adhesive 50 enters each recess 24 opened to the end surface while pushing out adhesive 50 at the lower end of second storage tube 22B, and is guided as second divided holder 21B descends. Then, uncured adhesive 50 is cured in a state where first divided holder 21A is closed by second divided holder 21B. The temperature and the standing time are set according to the type and curing time of adhesive 50. Heating, ultraviolet irradiation, and the like may be performed as necessary. For example, in a case where a one-component moisture-curable adhesive is used, the adhesive is cured in such a manner that the curing time is 7 to 15 minutes under 23°C and 50%RH, and the complete curing time is 24 hours or more, so that secondary battery cell 1 is fixed to battery holder 20, and battery module 2 is obtained as illustrated in Fig. 6.

As a result, it is possible to push out and supply uncured adhesive 50 to recess 24 formed on the inner surface of storage tube 22, and an advantage that the amount of adhesive 50 can be uniformly controlled for each secondary battery cell 1 and secondary battery cells 1 can be fixed to battery holder 20 with high reliability is obtained. Furthermore, since adhesive 50 is not applied to the outer surface of battery holder 20, but adhesive 50 is applied between the exterior can and second divided holder 21B on the inner surface side of battery holder 20, uncured adhesive 50 is not exposed, and it is possible to avoid a situation in which the adhesive adheres to other portions and the portions get dirty.

Recess 24 is preferably formed in a gently curved surface shape. As a result, adhesive 50 can be smoothly guided to recess 24, and the surplus can be discharged from recess 24 to the inner surface of second storage tube 22B along the curved surface.

Recess 24 may be uniformly provided on the inner surfaces of all second storage tubes 22B, but is preferably provided only on a portion to which adhesive 50 is applied. As illustrated in Figs. 9 and 10, it is preferable that uncured adhesive 50 is not exposed to the outside as much as possible. This makes it easy to avoid unintended adhesion of adhesive 50. Specifically, adhesive 50 is not applied to the side surface of the aggregate of secondary battery cells 1 illustrated in Fig. 9. Accordingly, as illustrated in the plan view of Fig. 5, among storage tube 22 of second storage tube 22B, second divided holder 21B is not provided with recess 24 on the outer surface region of storage tube 22 and the corresponding inner surface side, storage tube 22 being positioned along the periphery of battery holder 20 and exposed without storage tube 22 adjacent to the periphery. In other words, the portion of second storage tube 22B forming the outer edge of second divided holder 21B has a flat surface without providing recess 24. On the other hand, in second storage tube 22B positioned on the inner side surrounded by the other second storage tube 22B, recess 24 is provided on the inner surface thereof. As described above, the number and provided positions of recesses 24 are different according to the position of second storage tube 22B. As a result, the number, that is, the amount, and the application position of adhesive 50 for fixing secondary battery cell 1 to battery holder 20 also vary according to the position of secondary battery cell 1. In the present exemplary embodiment, it is sufficient that secondary battery cell 1 can be prevented from rotating inside battery holder 20, and it is sufficient that a fixing force capable of preventing the rotation can be exhibited. That is, although secondary battery cell 1 positioned on the outer peripheral side has a weak fixing force to battery holder 20 as compared with secondary battery cell 1 positioned on the inner side, it is sufficient that an adhesive force capable of preventing the rotation of secondary battery cell 1 can be exhibited, and thus there is no problem with such a configuration.

### (Cylindrical continuous body 23)

Note that, in battery holder 20, a plurality of cylindrical continuous bodies 23 in which a plurality of storage tubes 22 are linearly connected to each other are stacked in multiple stages in the lateral direction in the division plane between first divided holder 21A and second divided holder 21B. In the examples of Figs. 3 to 5 and the like, cylindrical continuous bodies 23 stacked in multiple stages are arranged in a staggered arrangement in the vertical direction, but may have a checkerboard shape or a matrix shape.

Furthermore, among cylindrical continuous bodies 23 stacked in multiple stages, recess 24 is formed on the inner surface of each storage tube 22 of intermediate cylindrical continuous body 23A and on the side of adjacent cylindrical continuous body 23B facing intermediate continuous cylinder 23A, intermediate cylindrical continuous body 23A being positioned in the middle in the stacking direction, adjacent cylindrical continuous body 23B being adjacent to intermediate cylindrical continuous body 23A. In the example of Fig. 10 and the like, among three-stage cylindrical continuous body 23, the second stage is intermediate cylindrical continuous body 23A, and the first and third stages are adjacent cylindrical continuous bodies 23B. That is, recess 24 is formed between first-stage cylindrical continuous body 23 and second-stage cylindrical continuous body 23 and between second-stage cylindrical continuous body 23 and third-stage cylindrical continuous body 23.

### (Opening window 26)

Furthermore, battery pack 100 may be provided with opening window 26 for visual recognition for confirming the application state after the application of the adhesive. Opening window 26 is provided on one end surface plate 28 of battery holder 20. By exposing a gap between the inner surface of storage tube 22 and the surface of secondary battery cell 1 through opening window 26, whether or not the gap between storage tube 22 exposed through opening window 26 and secondary battery cell 1 is filled with adhesive 50 can be, for example, visually confirmed from the outside of battery holder 20. By making it possible to visually recognize the application state of adhesive 50, it is possible to grasp the adhesion state of secondary battery cell 1 and improve the reliability.

In the example illustrated in Fig. 12, opening window 26 is formed in second storage tube 22B of second divided holder 21B. Opening window 26 is opened in a circular shape on the end surface of second divided holder 21B, and a part of cell partition wall 25 defining second storage tube 22B and a part of cell storage space 27 of second storage tube 22B are exposed. A gap between cell storage space 27 and cell partition wall 25 is a cross section of recess 24. Here, by opening opening window 26 in a region surrounded by three cell storage tubes 22, three cell storage spaces 27 are arranged at 120° intervals along the circumference. As illustrated in Fig. 11, the lower half of the exterior can of secondary battery cell 1 is inserted into first divided holder 21A, and adhesive 50 is poured into a region surrounded by the exterior cans in a state where the upper half of the exterior can is exposed, and second divided holder 21B is covered, so that adhesive 50 pushed out at the lower end of second storage tube 22B moves along recess 24 and crawls up the inner surface of second storage tube 22B. Then, when adhesive 50 reaches the upper end of second storage tube 22B, recess 24 is filled with adhesive 50. By opening opening window 26 on the upper surface of second divided holder 21B, it is possible to visually confirm that adhesive 50 reaches the upper end of recess 24 through opening window 26. Then, if it can be confirmed that adhesive 50 reaches the upper end or the vicinity of the upper end of recess 24, it can be determined that adhesive 50 is continuously applied from the lower end to the upper end of recess 24, that is, adhesive 50 is applied in the length direction of secondary battery cell 1, and thus, it is possible to determine the presence or absence of a defect such as a shortage of the adhesive, thereby improving the reliability of battery pack 100.

In the above example, the battery pack is attached to the electric device to be driven, and power is supplied to the electric device. Furthermore, in a case where the remaining capacity of the battery pack decreases or the battery pack deteriorates over time, the battery pack can be replaced and the electric device can be continuously used. The present invention is not limited to a replaceable battery pack mainly storing secondary battery cells, and can also be applied to an aspect in which secondary battery cells are stored in a housing of the electric device. In the present disclosure, the battery pack is only required to store the secondary battery cell in the case, and a battery pack in which the secondary battery cell for driving is built in the housing of the electric device itself is also referred to as a battery pack. That is, the present invention is not limited to the replaceable battery pack, and can also be applied to an electric device in which a secondary battery cell is built.

### INDUSTRIAL APPLICABILITY

The battery pack and the method for manufacturing the battery pack according to the present invention can be suitably used as a power supply device for a moving body such as an assist bicycle or an electric cart. Furthermore, the battery pack according to the present invention can be appropriately used for applications such as a power source for a wireless device and a power source of a portable electric device such as an electric cleaner or an electric tool.

### REFERENCE MARKS IN THE DRAWINGS

- 100: battery pack

- 1: secondary battery cell
- 2: battery module
- 3: circuit board
- 10: exterior case
- 11, 12: lid
- 14: module storage space
- 20: battery holder
- 21A: first divided holder
- 21B: second divided holder
- 22: storage tube
- 22A: first storage tube
- 22B: second storage tube
- 23: cylindrical continuous body
- 23A: intermediate cylindrical continuous body
- 23B: adjacent cylindrical continuous body
- 24: recess
- 25: cell partition wall
- 26: opening window
- 27: cell storage space
- 28: end surface plate
- 30: lead plate
- 40: insulating plate
- 50: adhesive
- 700: battery pack
- 701: secondary battery cell
- 721: upper holder
- 722: lower holder
- GP: gap

## Claims

1. A battery pack comprising:
a plurality of secondary battery cells; and
a battery holder including a plurality of storage tubes that respectively hold the plurality of secondary battery cells, wherein
the battery holder is divided into at least a first divided holder and a second divided holder in a length direction of each of the plurality of secondary battery cells,
the first divided holder includes first storage tubes and the second divided holder includes second storage tubes, each of the first storage tubes being joined with a corresponding one of the second storage tubes to form a cell storage space for storing a corresponding one of the plurality of secondary battery cells, and
at least a part of the second storage tubes form a recess on at least a part of an inner surface of a corresponding one of the second storage tubes, and
an adhesive is interposed between the recess of each of the second storage tubes and a corresponding one of the plurality of secondary battery cells.

2. The battery pack according to Claim 1, wherein
the battery holder includes cylindrical continuous bodies stacked in multiple stages, each of the cylindrical continuous bodies being formed by linearly connecting one or more storage tubes among the plurality of storage tubes,
the cylindrical continuous bodies include
an intermediate cylindrical continuous body positioned a middle of the cylindrical continuous bodies in a stacking direction of the multiple stages, and
an adjacent cylindrical continuous body being adjacent to the intermediate cylindrical continuous body in the stacking direction, and
the recess is formed on the inner surface of each of the one or more storage tubes of the intermediate cylindrical continuous body and the inner surface of each of the one or more storage tubes of the adjacent cylindrical continuous body, the inner surface of each of the one or more storage tubes facing the intermediate cylindrical continuous body.

3. The battery pack according to Claim 1, wherein
the plurality of storage tubes are stacked,
the plurality of storage tubes includes one or more second storage tubes positioned along a periphery of the battery holder, each of the one or more second storage tubes including a surface exposed without any second storage tube adjacent to the each of the one or more second storage tubes, and
the recess is not provided inside the surface of each of the one or more second storage tubes.

4. The battery pack according to Claim 1, wherein
the battery holder forms, on at least one end surface of the battery holder, an opening window through which a gap between the inner surface of the at least one of the second storage tubes and a surface of the corresponding one of the plurality of secondary battery cells is exposed.

5. The battery pack according to Claim 1, wherein
each of the first storage tubes has an inner surface that is a smooth surface.

6. The battery pack according to any one of Claims 1 to 5, wherein
the recess is formed in a gently curved surface shape.

7. The battery pack according to any one of Claims 1 to 5, wherein
each of the plurality of secondary battery cells has a cylindrical outer shape.

8. The battery pack according to Claim 7, further comprising
a lead plate that connects the plurality of secondary battery cells.

9. A method for manufacturing a battery pack including:
a plurality of secondary battery cells including a plurality of cylindrical exterior cans, respectively; and
a battery holder including a plurality of storage tubes each of which can hold a respective one of the plurality of secondary battery cells, the method comprising:
a step of inserting each of the plurality of secondary battery cells into a respective one of a plurality of first storage tubes of a first battery holder, each of the plurality of first storage tubes having a length shorter than a length of a corresponding one of the plurality of cylindrical exterior cans;
a step of applying an uncured adhesive to a gap surrounded by circumferential surfaces of a plurality of adjacent cylindrical exterior cans among the plurality of cylindrical exterior cans in a state where each of the plurality of cylindrical exterior cans is partially exposed from a respective one of the plurality of first storage tubes;
a step of inserting each of the plurality of cylindrical exterior cans partially exposed from the respective one of the plurality of first storage tubes into a respective one of a plurality of second storage tubes of a second battery holder, each of the plurality of second storage tubes having a length shorter than a length of a corresponding one of the plurality of cylindrical exterior cans, and guiding the uncured adhesive to a recess formed in at least a part of an inner surface of each of the plurality of second storage tubes; and
a step of curing the uncured adhesive to fix the plurality of secondary battery cells to the battery holder.

10. The method for manufacturing a battery pack according to Claim 9, wherein
the step of applying the uncured adhesive does not apply the adhesive to at least one of the plurality of cylindrical exterior cans positioned on an outer periphery among the plurality of cylindrical exterior cans partially exposed from the plurality of first storage tubes.

11. The method for manufacturing a battery pack according to Claim 9 or 10, further comprising
a step of confirming whether or not the recess is filled with the uncured adhesive through an opening window provided on a surface of the battery holder to which the uncured adhesive is applied and through which a gap between the inner surface of each of the plurality of second storage tubes and a surface of a corresponding one of the plurality of secondary battery cells is exposed.
